# EUROPÄISCHE PATENTANMELDUNG

(11) **EP 1 052 231 A1**
(43) Veröffentlichungstag der Anmeldung: **15.11.2000**
(21) Anmeldenummer: 00108456.5
(22) Anmeldetag: 18.04.2000
(51) Int. Cl.: C04B 7/43

(54) **Verfahren und Anlage zur thermischen Behandlung von mehlförmigen Rohmaterialien**

(30) Priorität: 03.05.1999 DE 19920143
(71) Anmelder: KHD Humboldt-Wedag AG, 51103 Köln (DE)
(72) Erfinder: Ramesohl, Hubert, 51427 Bergisch Gladbach (DE)

(57) **Zusammenfassung**

Um für Zementklinkerproduktionslinien einen dem Drehrohrofen vorgeschalteten und mit Zweitfeuerungen ausgestatteten Calcinator zu schaffen, in dem insbesondere grobstückige Brennstoffe wie z. B. unzerkleinerte Altreifen (25) und/oder andere grobstückige Sekundärbrennstoffe nutzbringend zum Zwecke der hochgradigen Calcination des Zementrohmehls durch Pyrolyse oder ggf. Verbrennung entsorgt werden können, ohne daß der Pyrolyseprozeß den Calcinationsprozeß stört, wobei gleichzeitig ein Abgas mit niedrigen NOₓ-Emissionen gesichert sein soll, wird erfindungsgemäß vorgeschlagen, den grobstückigen Brennstoff (25) wie Altreifen auf eine quer in einem weiteren Tertiärluftkanal (23) im Bereich der Zusammenführung mit dem Drehofenabgaskanal (11) angeordnete Verlagerungseinrichtung (25) wie z. B. Rost einzuschleusen, auf welchem der grobstückige Brennstoff mittels eines im Volumenstrom regulierbaren Tertiärluftteilstromes (22) pyrolysiert oder verbrannt wird und von welchem der Pyrolyse- oder Brennrückstand in den Drehofenabgaskanal (11) abgestoßen wird und das erzeugte CO-haltige Pyrolysegas bzw. Rauchgas ebenfalls in den Drehofenabgaskanal (11) eingeführt wird.

## Beschreibung

Die Erfindung betrifft ein Verfahren zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe (Drehofen) und ein Abluftstrom (Tertiärluft) der Kühlstufe (Klinkerkühler) in der Weise in der Calcinierstufe zur Calcination des Rohmehls genutzt werden, daß sowohl in den Drehofenabgaskanal als auch in den Tertiärluftkanal Brennstoff eingeführt wird, beide Kanäle zusammengeführt werden und die darin enthaltene Gas-Feststoff-Suspension in den untersten Zyklon des Zyklonschwebegas-Vorwärmersystems zwecks Abtrennung des calcinierten Rohmehls vom Gasstrom eingeführt wird. Außerdem betrifft die Erfindung eine Anlage zur Durchführung des Verfahrens.

Verfahren und Anlagen der oben beschriebenen Art, bekannt z. B. aus der EP-B-0 526 770, müssen in der Lage sein, in der dem Drehrohrofen vorgeschalteten, mit Zweitfeuerungen ausgestatteten Calcinierstufe ein hochgradig calciniertes Rohmehl vor Einführung in den Drehrohrofen zu erzeugen. Gleichzeitig werden die Erbauer und Betreiber von Zementklinkerproduktionslinien mit immer schärferen Forderungen nach niedrigen Emissionswerten bei Schadstoffen wie NOₓ und CO konfrontiert.

Die Erbauer und Betreiber von Zementklinkerproduktionslinien werden aber auch mit dem Problem konfrontiert, bei den in der Calcinierstufe eingesetzten Brennstoffen einen möglichst hohen Anteil an grobstückigen Brennstoffen wie z. B. unzerkleinerte Altreifen und/oder andere grobstückige ggf. reaktionsträge schwer zündbare bzw. schwer brennbare Brennstoffe, insgesamt Sekundärbrennstoffe genannt, einzusetzen und solche Stoffe auf diese Weise zum Zwecke der Calcination des Zementrohmehls nutzbringend zu entsorgen. Beim Einsatz von z. B. Altreifen zwecks Nutzung von deren Brennenergie gehen die Bemühungen verstärkt dahin, auch große Altreifen, speziell Lastkraftwagen-Reifen im Prozeß zu verwenden, ohne diese vorher durch kostenaufwendige Zerkleinerungsarbeit in stückige kleinere Partikel zu zerteilen.

So ist es z. B. aus der EP-A-0 803 693 bei einer Zementklinkerproduktionslinie bekannt, ganze Autoreifen in liegender Position in den Drehofenabgaskanal bzw. in den Einlaufschacht zum Drehofen einzuschieben, wobei die Altreifen im Einlaufschacht vergasen und verbrennen sollen und die Reststoffe in den Drehofen nach unten fallen sollen. Bei dieser Lösung besteht ein Nachteil zunächst einmal darin, daß jeweils dann, wenn ein Reifen in den Einlaufschacht geschoben wird, eine erhebliche Querschnittsverengung des Schachts stattfindet, die zu einer Druckverlusterhöhung sowie zu einem instabilen Betrieb der Anlage führt. Darüberhinaus stört ein in den Einlaufschacht als Rostplatte oder Festplatte eingebauter Tisch zur Lagerung der eingeschobenen Altreifen den normalen Prozeß ganz erheblich wegen der Gefahr der Ansatzbildungen. Außerdem entsteht beim Einschieben eines Altreifens plötzlich eine konzentrierte Energiezufuhr im Einlaufschacht bzw. im Drehofeneinlaufbereich. Für den unmittelbar danach einsetzenden Pyrolyse-, Vergasungs- und Verbrennungsprozeß ist dann meist nicht mehr genügend Sauerstoff vorhanden, so daß es im Drehofenabgas zu unerwünschten CO-Stößen bzw.

CO-Spitzen kommt, die dann zum Abschalten der nachgeschalteten elektrostatischen Staubabscheider (Elektrofilter) führen können, falls die CO-Spitzen einen bestimmten Grenzwert überschreiten. Die plötzliche Energiedarbietung im Prozeß ist in der Regel unerwünscht, weil nicht die notwendigen Rohmaterialmassenströme spontan zur Verfügung stehen, um die Wärme in Calcinationsarbeit umzuwandeln.

Beim Einsatz von Altreifen im Zementklinkerherstellungsprozeß ist es auch bekannt (EP-B-0 439 824), die Altreifen in der Drehofeneinlaufkammer bzw. im Guteinlaufbereich des Drehrohrofens mit Sauerstoffüberschuß zu verbrennen. Hierbei muß aber der Sauerstoffüberschuß in Form überschüssiger Sekundärluft durch den ganzen Drehrohrofen hindurchgezogen werden. Auch hier treten unerwünschte CO-Stöße auf, welche die Einsatzmenge an Altreifen begrenzen.

Schließlich ist aus der Fachzeitschrift "Zement-Kalk-Gips" Nr. 1/1999 eine Calciniereinrichtung mit einem separaten, Schachtvergaser genannten Nebenreaktor bekannt geworden, in dem ganze Altreifen vergast werden, wobei dann das entstehende Produktgas in einer separaten Rohrleitung dem Calcinator zugeführt wird. Die Reststoffe der im Schachtvergaser vergasten Altreifen sollen durch eine mechanische Abstoßvorrichtung in den Drehofeneinlaufschacht transportiert werden. Bei diesem Schachtvergaser fallen die eingebrachten Altreifen von oben auf einen nicht gasdurchströmten Tisch, und der als Vergasungsmittel eingesetzte Teilstrom aus der Tertiärluft wird ebenfalls von oben in den Schachtvergaser-Reaktor eingeführt. Durch die unmittelbare Einführung des Pyrolysegases aus dem Schachtvergaser in den Calcinator wird der eigentliche Calcinierprozeß, der beim bekannten System nur in der Drehofenabgasleitung erfolgt, vom Vergasungs- oder Pyrolyseprozeß, der starken Schwankungen unterliegen kann, beeinflußt. Es befinden sich immer große Mengen an Sekundärbrennstoff im Reaktor. Dies macht eine besondere Sicherheitseinrichtung erforderlich, um das Pyrolysegas im Falle einer Störung der Gesamtanlage über Dach nach den entsprechenden Sicherheitsbestimmungen abfackeln zu können.

Der Erfindung liegt die Aufgabe zugrunde, bei Zementklinkerproduktionslinien der oben beschriebenen Art einen dem Drehrohrofen vorgeschalteten, mit Zweitfeuerungen ausgestatteten Calcinator zu schaffen, in dem insbesondere grobstückige Brennstoffe wie z. B. unzerkleinerte Altreifen und/oder andere grobstückige Sekundärbrennstoffe nutzbringend zum Zwecke der Calcination des Zementrohmehls durch Pyrolyse oder wahlweise Verbrennung entsorgt werden können, ohne daß der Pyrolyseprozeß bzw. Verbrennungsprozeß den Calcinationsprozeß stört und ohne daß es zu Pulsationen im Gesamtsystem kommt, wobei gleichzeitig ein Restausbrand von CO-Stößen sowie ein Abgas mit niedrigen NOₓ-Emissionen gesichert sind.

Diese Aufgabe wird erfindungsgemäß verfahrensmäßig mit den Maßnahmen des Kennzeichnungsteils des Anspruchs 1 und vorrichtungsmäßig mit den Merkmalen des Kennzeichnungsteils des Anspruchs 9 gelöst. Vorteilhafte Ausgestaltungen der Erfindung sind in den jeweiligen Unteransprüchen angegeben.

Charakteristisch für die erfindungsgemäße Calcinierstufe einer Zementklinkerproduktionslinie ist, daß grobstückiger Brennstoff wie z. B. jeweils ein ganzer Altreifen auf eine quer in einem Tertiärluftkanal im Bereich der Zusammenführung mit dem Drehofenabgaskanal angeordnete Verlagungseinrichtung wie z. B. einen Rost eingeschleust wird, auf dem der grobstückige Brennstoff mittels eines von der Tertiärluftleitung abgezweigten Tertiärluftteilstromes pyrolysiert wird und von dem der Pyrolyserückstand in den Drehofenabgaskanal abgestoßen wird. Das Pyrolysegas wird ebenfalls in den Drehofenabgaskanal eingeführt, wo es eine CO-haltige Reduktionszone (CO-Wolke) bildet zwecks Reduktion des im Drehofenabgas enthaltenen NOₓ.

Der für die Pyrolyse des grobstückigen Brennstoffs vorgesehene Tertiärluftkanal ist in der Weise ein Pyrolysekanal, daß er im Bereich seiner Einführung in den Drehofenabgaskanal als Pyrolysekammer zur Pyrolyse des grobstückigen Brennstoffs wie z. B. Altreifen ausgebildet ist. In der Pyrolysekammer ist zur Aufnahme des grobstückigen Brennstoffs wie z. B. Altreifen der Rost angeordnet, der sich ausgehend etwa vom Zwickelbereich zwischen dem Drehofenabgaskanal und dem Pyrolysekanal quer über wenigstens einen Teil des Querschnitts der Pyrolysekammer erstreckt. Außerhalb der Pyrolysekammer ist seitlich am Pyrolysekanal eine Vorrichtung zum Einschleusen des grobstückigen Brennstoffes wie z. B. Altreifen angeordnet.

Als grobstückiger Brennstoff können außer unzerkleinerte Altreifen auch andere Sekundärbrennstoffe wie z. B. kompaktierte Restwertstoffe aus Müll, Plastikmaterial oder anderen brennbaren Stoffen, die vorher außerhalb des Zementklinkerherstellungsprozeßes in einem separaten Prozeß kompaktiert worden sind, in den Pyrolysekanal bzw. in die Pyrolysekammer eingeschleust werden. Der von einem Tertiärluftteilstrom durchströmte Rost zu Aufnahme des grobstückigen Brennstoffs in der Pyrolysekammer kann horizontal oder zum Zwickelbereich zwischen Drehofenabgaskanal und Pyrolysekanal schräg geneigt angeordnet sein. Dabei steht der Rost mit Vorteil mit einer Abstoßvorrichtung zum Abwurf des Pyrolyserückstands bzw. nicht verbrannter Reststoffe in den Drehofenabgaskanal in Verbindung. Der Rost kann aber auch ein Wanderrost sein.

Der Pyrolysekanal mit der Pyrolysekammer zur Pyrolyse des grobstückigen Brennstoffs ist nicht in den ebenfalls mit einem Tertiärluftteilstrom durchströmten eigentlichen Calcinierkanal mit wenigstens einer Rohmehleinführung und wenigstens einer Brennstoffeinführung integriert, sondern neben diesem Calcinierkanal installiert. Mit Vorteil ist der Pyrolysekanal zwischen dem Drehofenabgaskanal und dem Calcinierkanal angeordnet, wobei der Calcinierkanal oberhalb der Zusammenführung von Pyrolysekanal und Drehofenabgaskanal in den Drehofenabgaskanal einmündet. Bei dieser erfindungsgemäßen Integration des Pyrolysekanals für den grobstückigen Brennstoff in die Calcinierstufe einer Zementklinkerproduktionslinie wird der Calcinierkanal mit der dort ablaufenden Rohmehlcalcinierung von dem Pyrolyseprozeß nicht gestört, auch nicht wenn große sperrige Feststoffe pyrolysiert werden, und es kommt dadurch auch nicht zu Pulsationen im Gasfluß des Gesamtsystems. Der Pyrolysevorgang kann mittels eines Stellorgans, welches die Luftzuführung steuert, vorteilhaft prozeßabhängig gesteuert werden. Gleichzeitig ist die aus der Pyrolyse des grobstückigen Brennstoffs resultierende CO-Wolke ein wirksames Mittel zur NOₓ-Reduktion im Abgas. Strömungsabwärts von der Zusammenführung von Drehofenabgaskanal und Pyrolysekanal mündet zwecks Verbrennung der aus der Reduktionszone etwa verbliebenen CO-Strähnen und/oder unverbrannt gebliebener anderer Brennstoffkomponenten ein weiterer Tertiärluftteilstrom in den Drehofenabgaskanal ein zwecks Restausbrandes solcher restlicher Brennstoffe.

Die Erfindung und deren weitere Merkmale und Vorteile werden anhand des in den Figuren schematisch dargestellten Ausführungsbeispieles näher erläutert.

Es zeigt:
- Fig. 1:: in schematischer Darstellung ausschnittsweise in Seitenansicht die Calcinierstufe bzw. den Calcinator einer Anlage zur Herstellung von Zementklinker aus Zementrohmehl, und
- Fig. 2:: in Draufsicht einen Schnitt längs der Linie II-II der Figur 1.

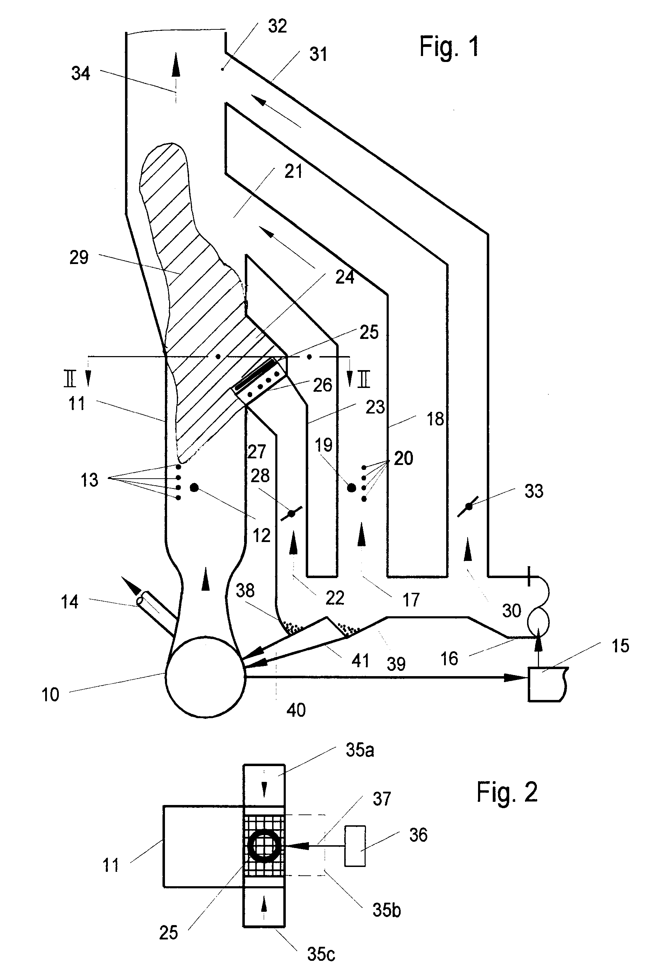

Die Zementklinkerproduktionslinie mit Calcinator der Figur 1 weist einen Drehrohrofen 10 auf mit einem Drehofenabgaskanal 11, der nach oben zum untersten Zyklon eines nicht dargestellten Zyklonschwebegas-Vorwärmersystems führt. Das im vorletzten (zweituntersten) Zyklon aus dem Abgasstrom ausgeschiedene vorgewärmte Rohmehl wird geteilt und ein Rohmehlteilstrom gelangt über einen Rohmehleintrag 12 in den Drehofenabgaskanal 11, der oberhalb, unterhalb und/oder in Höhe des Rohmehleintrages 12 mit wenigstens einer Brennstelle 13 versehen ist, im Ausführungsbeispiel mit vier Brennstellen 13, in welchem Brennstoff vorzugsweise flammenlos mit Sauerstoffüberschuß oder mit Sauerstoffunterschuß verbrannt wird. Der Drehofen 10 kann im Bereich seiner Einlaufkammer mit einem Teilgasabzug bzw. Bypassgasabzug 14 ausgestattet sein.

Der im Drehrohrofen 10 aus dem calcinierten Zementrohmehl erzeugte Zementklinker wird in einem Klinkerkühler 15 gekühlt. Ein Teil der vom Klinkerkühler 15 abgezogenen Kühlerabluft wird als Tertiärluft über Tertiärluftleitung 16 zum Calcinator herangeführt. Ein Teilstrom 17 der Tertiärluft wird durch einen Calcinierkanal 18 gezogen, der mit wenigstens einem Rohmehleintrag 19 ebenfalls aus der vorletzten (zweituntersten) Zyklonstufe des Zyklonschwebegas-Vorwärmersystems sowie mit wenigstens einer Brennstelle 20, im Ausführungsbeispiel vier Brennstellen 20, ausgestattet ist, die oberhalb, unterhalb und/oder in Höhe des Rohmehleintrages 19 angeordnet sein können. Die Abgase des Calcinierkanals 18 münden bei 21 in den Drehofenabgaskanal 11 ein.

Beim erfindungsgemäßen Calcinator ist ein weiterer von einem Tertiärluftteilstrom 22 durchströmter Tertiärluftkanal in der Weise als ein Pyrolysekanal 23 vorhanden, daß er im Bereich seiner Einführung in den Drehofenabgaskanal 11 als Pyrolysekammer 24 zur Pyrolyse grobstückigen Brennstoffes wie z. B. unzerkleinerter Altreifen 25 ausgebildet ist, die auf einem vom Tertiärluftteilstrom 22 durchströmten Rost 26 verlagert sind, der sich ausgehend etwa vom Zwickelbereich 27 zwischen Drehofenabgaskanal 11 und Pyrolysekanal 23 quer über wenigstens einen Teil des Querschnitts der Pyrolysekammer 24 erstreckt. Die Menge des zur Pyrolysekammer 24 strömenden Tertiärluftteilstroms 22 kann durch Verstellung der Regelklappe 28 gesteuert werden. Damit wird auch der Pyrolyseprozeß gesteuert, d. h. zusätzlich zu der CO-Wolke, die bei unterstöchiometrischer Brennstoffverbrennung an den Brennstellen 13 erzeugt werden kann, kann im Drehofenabgaskanal die in Figur 1 rechtsschraffierte CO-haltige Wolke 29 erzeugt werden, die wirkungsvoll mitwirkt zu verhindern, daß NOₓ-Bildungen, die aus dem Drehofen 10 kommen, in die oberen Bereiche des erfindungsgemäßen Calciniersystems gelangen können. Strömungsabwärts von der Zusammenführung von Drehofenabgaskanal 11 und Pyrolysekanal 23, im zeichnerischen Ausführungsbeispiel auch nach Einmündung des Calcinierkanals 18, mündet in den Drehofenabgaskanal 11 ein weiterer Tertiärluftteilstrom 30 ein, der über wenigstens eine weitere Zweigleitung 31 von der vom Klinkerkühler kommen Tertiärluftleitung 16 abgezweigt ist. Dieser bei 32 einmündende Tertiärluftteilstrom 30 dient zum möglichst vollständigen Restausbrand des im Drehofenabgaskanal 11 nicht vollständig umgesetzten CO sowie ggf. noch anderer vorhandener brennbarer Abgasbestandteile. Der Volumenstrom der über die Zweigleitung 31 eingeführten Tertiärluft 30 kann über eine Regeleinrichtung 33 wie Luftklappe gesteuert werden.

Die Gas-Feststoffsuspension 34 wird dann vom Saugzuggebläse des Zyklonschwebegas-Vorwärmersystems nach oben abgezogen und in der Regel nach einer Strömungsumlenkung in den untersten Zyklon des Vorwärmersystems zwecks Abtrennung des hochgradig calcinierten Rohmehls vom Gasstrom eingeführt. Das abgetrennte calcinierte Rohmehl wird dann direkt dem Drehrohrofen 10 zugeleitet.

Wie deutlich aus Figur 2 hervorgeht, ist zur Beschickung der Pyrolysekammer 24 mit dem grobstückigen Brennstoff wie z. B. Altreifen außerhalb der Pyrolysekammer seitlich am Pyrolysekanal 23 eine Vorrichtung 35a bzw. 35b bzw. 35c angeordnet, wobei die Einschleuserichtung von der örtlichen baulichen Situation des Calcinators abhängt. Die Einschleusevorrichtungen sind gasdicht zum Calcinationssystem verschlossen, um einen Falschlufteintritt zu verhindern. Der Rost 26 steht auch mit einer Abstoßvorrichtung 36 in Verbindung, mit in Figur 2 angezeigter bevorzugter Abstoßrichtung 37, um durch Kippen, Schwenken, Rütteln des Rostes den Pyrolyserückstand bzw. nicht verbrannte Reststoffe in den Drehofenabgaskanal 11 abzustoßen, von wo diese Reststoffe in den Drehrohrofen 10 gelangen.

Der Rost 26 in der Pyrolysekammer 24 kann aus einem geeigneten thermisch hoch belastbaren Material bestehen oder indirekt gekühlt sein. Der Rost 26 kann auch aus einem Wanderrost bestehen, mit der Bewegungsrichtung z. B. von 35a nach 35c.

Jedenfalls kann beim erfindungsgemäßen Calciniersystem die Pyrolyse des grobstückigen Brennmaterials in der Pyrolysekammer 24 so stattfinden, daß sie unterstöchiometrisch abläuft, d. h. daß bewußt eine hochgradig CO-haltige Atmosphäre 29 im Drehofenabgaskanal 11 geschaffen wird, um das ofengängige NOₓ zu reduzieren. Gleichzeitig werden erfindungsgemäß Altreifen und andere grobstückige Sekundärbrennstoffe bis hin zu verdichteten Plastikmüllpaketen nutzbringend entsorgt und zur Erzeugung hochgradig calcinierten Zementrohmehls verwertet.

Der durch den Rost 26 und den Pyrolysekanal 23 nach unten durchfallende Staub wie z. B. Asche sowie auch der im benachbarten Calcinierkanal 18 nach unten durchfallende Staub kann jeweils in einer Zitze 38 bzw. 39 gesammelt werden, und diese feinkörnigen Stoffe können je nach den räumlichen Verhältnissen der Calcinieranlage ggf. über Leitungen 40, 41 direkt in den Drehrohrofen 10 eingeführt werden.

## Patentansprüche

1. Verfahren zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe (10) (Drehofen) und ein Abluftstrom (Teritärluft) der Kühlstufe (15) (Klinkerkühler) in der Weise in der Calcinierstufe zur Calcination des Rohmehls genutzt werden, daß sowohl in den Drehofenabgaskanal (11) als auch in den Tertiärluftkanal (18) Brennstoff eingeführt wird, beide Kanäle zusammengeführt werden und die darin enthaltene Gas-Feststoff-Suspension (34) in den untersten Zyklon des Zyklonschwebegas-Vorwärmersystems zwecks Abtrennung des calcinierten Rohmehls vom Gasstrom eingeführt wird,
dadurch gekennzeichnet, daß grobstückiger Brennstoff (25) auf eine quer in einem weiteren Tertiärluftkanal (23) im Bereich der Zusammenführung mit dem Drehofenabgaskanal (11) angeordnete Verlagerungseinrichtung (26) eingeschleust wird, auf welcher der grobstückige Brennstoff mittels eines Tertiärluftteilstromes (22) pyrolysiert oder verbrannt wird und von welcher der Pyrolyse- bzw. Brennrückstand in den Drehofenabgaskanal (11) abgestoßen wird und das Pyrolysegas bzw. Rauchgas ebenfalls in den Drehofenabgaskanal (11) eingeführt wird.

2. Verfahren nach Anspruch 1,
dadurch gekennzeichnet, daß als grostückiger Brennstoff unzerkleinerte Altreifen (25) in den Pyrolysekanal (23) eingeschleust werden.

3. Verfahren nach Anspruch 1,
dadurch gekennzeichnet, daß als grobstückiger Brennstoff andere grobstückige Sekundärbrennstoffe wie kompaktierte Restwertstoffe aus Müll, Plastikmaterial oder anderen brennbaren Stoffen, die vorher außerhalb des Zementklinkerherstellungsprozeßes in einem separaten Prozeß kompaktiert worden sind, in den Pyrolysekanal (23) eingeschleust werden.

4. Verfahren nach Anspruch 1,
dadurch gekennzeichnet, daß im Pyrolysekanal (23) als Verlagerungseinrichtung für die eingeschleusten grobstückigen Brennstoffe (25) ein vom Tertiärluftteilstrom (22) von unten nach oben durchströmter Rost (26) verwendet wird.

5. Verfahren nach den Ansprüchen 1 oder 4,
dadurch gekennzeichnet, daß der sich auf dem Rost (26) sammelnde Pyrolyserückstand bzw. die nicht verbrannten Reststoffe selbsttätig über eine Materialböschung oder durch Rostbewegung vom Rost (26) in den Drehofenabgaskanal (11) abgestoßen werden.

6. Verfahren nach Anspruch 1,
dadurch gekennzeichnet, daß der in den Pyrolysekanal auf die Verlagerungseinrichtung wie z. B. den Rost (26) eingeschleuste grobstückige Brennstoff (25) im Tertiärluftteilstrom (22) unterstöchiometrisch mit Sauerstoffunterschuß verbrannt wird zwecks Bildung einer CO-haltigen Reduktionszone (29) (CO-Wolke) im Drehofenabgaskanal (11) zur Reduktion des vom Drehofen (10) kommenden NOₓ, wobei strömungsabwärts von der Zusammenführung von Drehofenabgaskanal (11) und Pyrolysekanal (23) gesehen in die Suspension ein weiterer Tertiärluftteilstrom (30) zum Restausbrand der CO-Wolke eingeführt wird.

7. Verfahren nach einem oder mehreren der Ansprüche 1 bis 6,
dadurch gekennzeichnet, daß in den Drehofenabgaskanal (11) unterhalb der Zusammenführung mit dem Pyrolysekanal (23) Rohmehl (12) und Brennstoff (13) eingeführt werden.

8. Verfahren nach einem oder mehreren der Ansprüche 1 bis 7,
dadurch gekennzeichnet, daß in den Drehofenabgaskanal (11) oberhalb der Zusammenführung mit dem Pyrolysekanal (23) der von einem Tertiärluftteilstrom (17) durchströmte Calcinierkanal (18) einmündet, in den Rohmehl (19) und Brennstoff (20) eingeführt werden.

9. Anlage zur thermischen Behandlung von mehlförmigen Rohmaterialien, insbesondere bei der Herstellung von Zementklinker aus Rohmehl, wobei das Rohmehl in einem Brennprozeß durch Vorwärmen, Calcinieren, Sintern und Kühlen thermisch behandelt wird, und der Abgasstrom der Sinterstufe (10) (Drehofen) und ein Abluftstrom (Teritärluft) der Kühlstufe (15) (Klinkerkühler) in der Weise in der Calcinierstufe zur Calcination des Rohmehls genutzt werden, daß sowohl im Drehofenabgaskanal (11) als auch im Tertiärluftkanal (18) wenigstens eine Brennstelle vorhanden ist, wobei beide Kanäle zusammengeführt sind und die darin enthaltene Gas-Feststoff-Suspension (34) in den untersten Zyklon des Zyklonschwebegas-Vorwärmersystems zwecks Abtrennung des calcinierten Rohmehls vom Gasstrom eingeführt wird,
gekennzeichnet durch folgende Merkmale:
a) es ist ein weiterer Tertiärluftkanal in der Weise als ein Pyrolysekanal (23) vorhanden, daß er im Bereich seiner Einführung in den Drehofenabgaskanal (11) als Pyrolysekammer (24) zur Pyrolyse grobstückigen Brennstoffs (25) wie z. B. Altreifen ausgebildet ist,
b) in der Pyrolysekammer (24) ist zur Aufnahme des grobstückigen Brennstoffs (25) eine Verlagerungseinrichtung (26) angeordnet, die sich ausgehend etwa vom Zwickelbereich (27) zwischen Drehofenabgaskanal (11) und Pyrolysekanal (23) quer über wenigstens einen Teil des Querschnitts der Pyrolysekammer (24) erstreckt,
c) außerhalb der Pyrolysekammer (24) ist seitlich am Pyrolysekanal (23) eine Vorrichtung (35a/35b/35c) zum Einschleusen des grobstückigen Brennstoffes (25) wie z. B. Altreifen angeordnet.

10. Anlage nach Anspruch 9,
dadurch gekennzeichnet, daß die Verlagerungseinrichtung zur Aufnahme des grobstückigen Brennstoffes (25) ein von einem Tertiärluftteilstrom durchströmter Rost oder umströmte Platte (26) ist, der bzw. die horizontal oder zum Zwickelbereich (27) zwischen Drehofenabgaskanal (11) und Pyrolysekanal (23) schräg geneigt angeordnet ist, und daß der Rost oder die Platte (26) mit einer Abstoßvorrichtung (36) zum Abwurf des Pyrolyserückstandes bzw. nicht verbrannter Reststoffe in den Drehofenabgaskanal (11) in Verbindung steht.

11. Anlage nach Anspruch 10,
dadurch gekennzeichnet, daß die Abstoßvorrichtung (36) für den Rost/Platte (26) eine Einrichtung zum Schwenken/Kippen und/oder Verschieben und/oder Rütteln des Rostes/Platte ist, oder daß der Rost ein Wanderrost ist.

12. Anlage nach einem oder mehreren der Ansprüche 9 bis 11, dadurch gekennzeichnet, daß oberhalb der Einmündung des Pyrolysekanals (23) in den Drehofenabgaskanal (11) der ebenfalls von einem Teritiärluftteilstrom (17) durchströmte Calcinierkanal (18) mit wenigstens einer Brennstelle (20) und wenigstens einem Rohmehleintrag (19) in den Drehofenabgaskanal (11) einmündet, d. h. daß der Pyrolysekanal (23) unterhalb des Calcinierkanals (18) in den Drehofenabgaskanal (11) einmündet.

13. Anlage nach einem oder mehreren der Ansprüche 9 bis 12, dadurch gekennzeichnet, daß unterhalb der Einmündung des Pyrolysekanals (23) in den Drehofenabgaskanal (11) in letzterem wenigstens eine Brennstelle (13) und wenigstens ein Rohmehleintrag (12) angeordnet ist.

14. Anlage nach den Ansprüchen 9 bis 13, dadurch gekennzeichnet, daß strömungsabwärts von der Zusammenführung von Drehofenabgaskanal (11) und Pyrolysekanal (23) in den Drehofenabgaskanal (11) ein Tertiärluftteilstrom (30) einmündet, der über wenigstens eine weitere Zweigleitung (31) von der vom Klinkerkühler (15) kommenden Tertiärluftleitung (16) abgezweigt ist.

15. Anlage nach einem oder mehreren der Ansprüche 9 bis 14, dadurch gekennzeichnet, daß in der Calcinierstufe im Bereich ihrer Strömungsumlenkung eine Wirbelkammer bzw. Mischkammer zur innigen Vermischung der Gas-Rohmehl-Brennstoff-Suspension angeordnet ist.
